(19) Europäisches Patentamt

European Patent Office

Office européen des brevets

(11) **EP 0 763 913 B1**

(12) **FASCICULE DE BREVET EUROPEEN**

(45) Date de publication et mention
de la délivrance du brevet:
**08.11.2006 Bulletin 2006/45**

(51) Int Cl.:
*H04L 9/32* *(2006.01)*    *H04N 7/167* *(2006.01)*

(21) Numéro de dépôt: **96401955.8**

(22) Date de dépôt: **13.09.1996**

(54) **Procédé de mise en gage de données pour un protocole d'échange de données sécurisé**

Verfahren zur Datenhinterlegung für ein gesichertes Datenaustauschprotokoll

Method for data escrowing for a secure data exchange protocol

(84) Etats contractants désignés:
**DE FR GB IT**

(30) Priorité: **15.09.1995 FR 9510842**

(43) Date de publication de la demande:
**19.03.1997 Bulletin 1997/12**

(73) Titulaire: **THOMSON multimedia**
**92648 Boulogne Cédex (FR)**

(72) Inventeur: **Fischer, Jean-Bernard**
**92050 Paris la Defense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**DE-C- 4 234 165**

• **IBM TECHNICAL DISCLOSURE BULLETIN, vol. 23, no. 7B, Décembre 1980, NEW YORK, US, pages 3325-3327, XP002004302 ANONYMOUS: "Packetprint for Electronic Signature or Message Authentication. December 1980."**
• **GLOBECOM TOKYO '87. IEEE/IECE GLOBAL TELECOMMUNICATIONS CONFERENCE 1987. CONFERENCE RECORD (CAT. NO.87CH2520-5), TOKYO, JAPAN, 15-18 NOV. 1987, 1987, NEW YORK, NY, USA, IEEE, USA, pages 1439-1443 vol. 3, XP000043860 TOKURA N ET AL: "A broadband subscriber network using optical star couplers"**
• **ADVANCES IN CRYPTOLOGY - CRYPTO '93. 13TH ANNUAL INTERNATIONAL CRYPTOLOGY CONFERENCE PROCEEDINGS, PROCEEDINGS OF CRYPTO '93, SANTA BARBARA, CA, USA, 22-26 AUG. 1993, ISBN 3-540-57766-1, 1994, BERLIN, GERMANY, SPRINGER-VERLAG, GERMANY, pages 40-48, XP000502362 TAYLOR R: "An integrity check value algorithm for stream ciphers"**

EP 0 763 913 B1

**Description**

L'invention concerne un procédé de mise en gage de données pour un protocole d'échange de données sécurisé.

L'invention s'applique notamment de façon avantageuse aux systèmes de contrôle d'accès physique et logique, par exemple dans les réseaux d'ordinateurs ou les systèmes de contrôle tels que ceux que l'on trouve par exemple dans les décodeurs de télévision à accès conditionnel (télévision à péage, télévision cryptée, etc). Bien entendu, ces applications ne sont en aucune façon limitatives et ne sont données ici qu'à titre d'exemples de domaines techniques dans lesquels peut être utilisée l'invention.

Le principe de la mise en gage d'une donnée consiste, pour une première partie, à s'engager auprès d'une autre partie sur une donnée prédéterminée mais sans communiquer en clair cette donnée. Lors d'une étape ultérieure, la première partie révèle à la seconde la donnée en clair, la seconde partie ayant la possibilité de vérifier à ce moment que la donnée en clair est bien celle qui avait été secrètement mise en gage auparavant. Le document DE-C-4234165 décrit un procédé de vérification ultérieure de données transmises en clair d'une instance A vers une instance B, la vérification étant effectuée en utilisant une clé secrête accessible par A.

Ici et dans la suite, on notera que le terme "partie" concerne aussi bien des personnes morales ou physiques que des systèmes électroniques ou informatiques échangeant des données entre eux de façon entièrement automatique dans le cadre d'un protocole particulier, ou, plus généralement, d'une transaction donnée.

De même, on appellera "donnée gagée" la donnée faisant l'objet de la transaction, "débiteur" la partie qui détient initialement la donnée gagée (la "première partie" indiquée plus haut) et "créancier" la partie destinataire de la donnée gagée (la "seconde partie" indiquée plus haut).

Un tel protocole de mise en gage implique plusieurs contraintes :

- en premier lieu, la donnée gagée doit rester secrète pour le créancier (et également pour les tiers) jusqu'au moment venu, par exemple jusqu'à la conclusion d'un travail effectué en commun ou l'achèvement d'un échange de données sécurisé entre les deux parties ;
- il est indispensable que le débiteur ne puisse se dédire ni tricher, par exemple en révélant au créancier une donnée autre que celle qui avait été initialement mise en gage.

De tels procédés de mise en gage ont déjà été proposés. Ils utilisent généralement des fonctions de hachage cryptographique tel que le DES en mode CBC. On trouvera un exposé de ces fonctions ainsi que des exemples de leur mise en oeuvre dans B. Preneel et coll.,

« Cryptographically Secure Hash Functions: an Overview », R. C. Merkle, « One-Way Hash Functions and DES », LNCS, 435, Springer Verlag (1990), CRYPTO'89, pp. 428-446 ou G. J. Simmons, Contemporary Cryptology, IEEE Press, Chap. 6 : Digital Signature.

L'un des inconvénients de ces fonctions tient au fait qu'elles nécessitent d'importantes ressources mémoire et une puissance de calcul importante, inconvénient qui peut être rédhibitoire lorsque l'on veut mettre en oeuvre le procédé avec des configurations de dimensions réduites, telles que celles des microcontrôleurs et des microcircuits des cartes à puce.

Pour remédier à cette difficulté, la présente invention propose un procédé de mise en gage de données utilisant notablement moins de ressources mémoire et de calcul, permettant ainsi avantageusement sa mise en oeuvre par les microcircuits ou microcontrôleurs de simples cartes à puce.

Ce procédé est du type connu précité, c'est-à-dire comprenant :

- une étape de "mise en gage", dans laquelle un partie débitrice, détentrice d'une donnée gagée, échange des informations avec une partie créancière de manière à transmettre à cette dernière une donnée image de la donnée gagée, représentant cette dernière de façon univoque mais non réversible,
- une étape d'"ouverture", dans laquelle la partie débitrice échange des informations avec la partie créancière de manière à transmettre à cette dernière la donnée gagée en clair ou d'une manière permettant de la retrouver, et dans laquelle la partie créancière peut vérifier la conformité de cette donnée gagée avec celle de l'étape de mise en gage.

Selon l'invention, il est caractérisé en ce que :

- à l'étape de mise en gage, la partie débitrice :

- produit un germe appliqué à un générateur pseudo-aléatoire de manière à produire un mot pseudo-aléatoire,
- combine de manière univoque et réversible ce mot pseudo-aléatoire à la donnée mise en gage, de manière à produire un mot de contrôle, et
- transmet à la partie créancière uniquement le mot de contrôle,
- à l'étape d'ouverture la partie débitrice transmet à la partie créancière le germe avec la donnée gagée en clair, et
- la partie créancière, à réception du germe et de la donnée gagée :

- applique le germe à un générateur pseudo-aléatoire semblable à celui de la partie débitrice, de manière à produire un autre mot pseudo-aléatoire,
- combine, de la même manière univoque et réversible que pour la partie débitrice, cet autre mot pseudo-aléatoire au mot de contrôle, de manière à produire une donnée de contrôle, et

- contrôle la conformité de la donnée de contrôle avec la donnée gagée en clair reçue de la partie débitrice.

Dans une forme de réalisation avantageuse le mot et l'autre mot pseudo-aléatoires produits par les générateurs pseudo-aléatoires respectifs des parties débitrices et créancières sont des mots de même longueur que la donnée gagée, et lesdites opérations de combinaison univoque et réversible sont des OU EXCLUSIF.

D'autres caractéristiques et avantages apparaîtront à la lecture de la description détaillée ci-dessous d'un exemple de mise en oeuvre de l'invention.

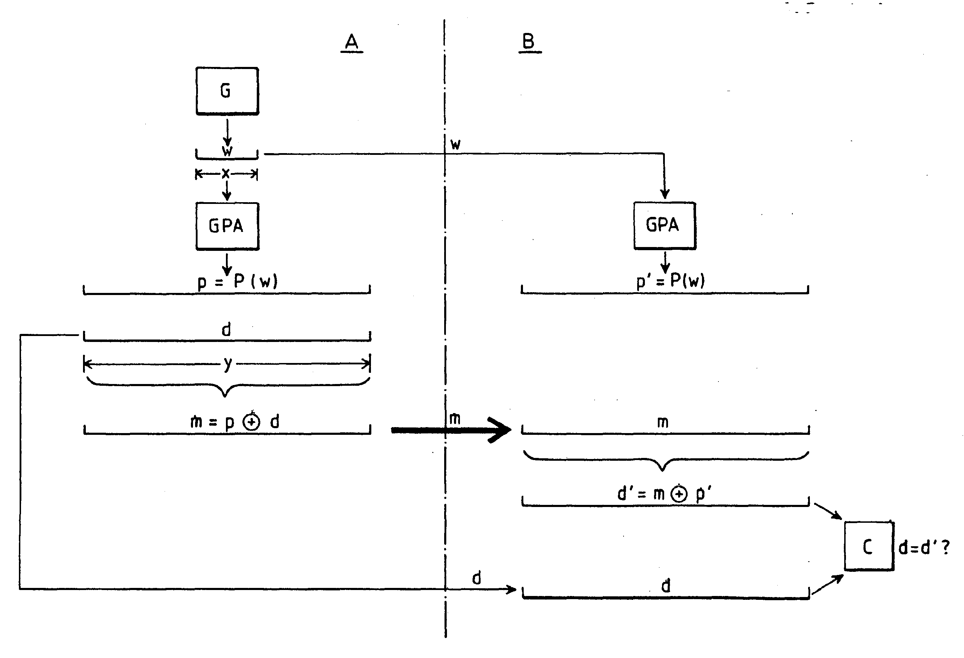

La figure unique illustre de façon schématique les différentes opérations et échanges de données effectués pour la mise en oeuvre du procédé de l'invention.

On suppose qu'une première partie A (le débiteur) soit tenu de s'engager auprès d'une seconde partie B (le créancier) sur une donnée d devant rester temporairement secrète, par exemple jusqu'à la conclusion d'un travail commun ou l'achèvement d'une transaction entre les deux parties.

Le protocole se déroule essentiellement en deux étapes :

- la "mise en gage" : le débiteur A, qui possède la donnée d qu'il désire mettre en gage auprès du créancier B, échange des messages avec ce dernier de telle sorte que, à la fin de cette étape, le créancier B détienne une information (que l'on désignera par la suite m) représentant d de façon univoque mais ne permettant pas par elle-même de retrouver cette donnée d (en termes probabilistes, ceci revient à dire que B ne doit pas pouvoir deviner d à partir de m avec une probabilité meilleure que 1/n, n étant la valeur d'un paramètre de sécurité) ;
- l'"ouverture" : le débiteur A révèle en clair la donnée d au créancier B, et B doit pouvoir s'assurer que la donnée qui lui est transmise à cette étape est bien la même que celle qui avait été secrètement mise en gage à l'étape précédente (en termes probabilistes, ceci revient à dire que, si le débiteur A tente de tricher en révélant une valeur autre que celle mise en gage, il doit pouvoir être découvert avec une probabilité d'au moins 1-1/n).

Essentiellement, le procédé de la présente invention est basé sur l'utilisation d'un générateur pseudo-aléatoire, c'est-à-dire une fonction qui, pour un mot quelconque en entrée appelé "germe", produit en sortie un mot de longueur supérieure. Le mot de sortie est produit de manière déterministe mais il est pseudo-aléatoire, c'est-à-dire que, connaissant les premiers bits du mot, il est quasiment impossible de trouver le bit suivant sans connaître le germe et, inversement, il est au moins aussi difficile de trouver le germe à partir du mot en sortie.

En d'autres termes, le générateur pseudo-aléatoire doit être difficile à inverser, si ce n'est en nécessitant une puissance et/ou un temps de calcul rédhibitoires compte tenu de l'application envisagée, et notamment des temps de transaction habituels.

On peut en particulier utiliser pour réaliser ce générateur pseudo-aléatoire un "automate cellulaire" tel que celui décrit dans S. Wolfram, « Cryptography with Cellular Automata », Advances in Cryptology: Proc. Crypto '85, Lecture Notes in Computer Science, 218 (1986), pp. 429-432.

On décrira plus bas la mise en oeuvre d'un tel automate cellulaire dans le cadre de l'invention ; une telle réalisation n'est cependant donnée qu'à titre d'exemple et ne présente aucun caractère limitatif.

Comme illustré sur la figure, chacune des parties A et B intervenant au procédé possède un tel générateur pseudo-aléatoire référencé GPA, les deux générateurs fonctionnant suivant le même algorithme.

Le débiteur A dispose au surplus d'un générateur aléatoire G.Chacune des parties A et B est en outre dotée de moyens permettant de réaliser une fonction OU EXCLUSIF bit à bit, notée "⊕" par la suite.

La partie créancière B possède enfin des moyens de comparaison bit à bit C permettant de déterminer l'identité entre deux mots appliqués en entrée (la concordance de ces mots avérant l'absence de falsification des données par le débiteur en cours de transaction).

Le déroulement du processus est le suivant : comme indiqué plus haut, il se déroule en deux étapes, à savoir la "mise en gage" et l'"'ouverture".

La mise en gage commence par l'obtention, du côté de la partie débitrice A, d'un mot aléatoire w produit par le générateur G.

Ce mot w est appliqué comme germe au générateur pseudo-aléatoire GPA, qui produit alors, conformément à son algorithme, une suite pseudo-aléatoire p = P(w), de même longueur que la donnée d devant être mise en gage entre les parties A et B.

A calcule alors m = p ⊕ d, c'est-à-dire opère un OU EXCLUSIF entre p et d (qui sont deux données de même longueur), et transmet la donnée m résultante à la partie créancière B.

On notera que la donnée m est une représentation chiffrée univoque de la donnée d, mais que cette dernière est complètement-cachée dans la mesure où l'on ne peut pas déterminer la suite p produite par le générateur pseudo-aléatoire : il s'agit là d'une propriété d'une combinaison par un OU EXCLUSIF, également connue sous le nom de "procédé one-time pad"). En d'autres termes, le chiffrement par application du OU EXCLUSIF est aussi sûr que le générateur pseudo-aléatoire, c'est-à-dire qu'un observateur extérieur (la partie B ou un tiers quelconque) ne peut pas, à partir de m, deviner la donnée d avec une probabilité meilleure que celle qu'il aurait de deviner p sans connaître le germe w du générateur pseudo-aléatoire.

Le mot m ayant été mis en gage auprès de B, les parties A et B peuvent maintenant poursuivre le protocole engagé, en opérant la transaction voulue entre elles, en réalisant le travail en commun prévu, etc.

Une fois cette phase opératoire achevée, on peut passer à l'étape d'ouverture.

Le débiteur A divulgue alors au créancier, en clair, la donnée d mise en gage ainsi que le germe w qui avait servi à chiffrer cette donnée au début de l'étape de mise en gage.

La partie B calcule alors au moyen de son propre générateur pseudo-aléatoire une donnée p' = P(w) (avec normalement p = p' si A a bien transmis à B le véritable germe). Avec la donnée chiffrée m qui avait été mise en gage et qu'elle avait conservée, la partie B calcule alors, par une fonction OU EXCLUSIF, d' = m ⊕ p' et vérifie que d' = d, ce qui certifie le bon déroulement de l'ensemble des opérations : en effet, si tout s'est déroulé correctement, on doit avoir d' = m ⊕ p' = (p ⊕ d) ⊕ p = p ⊕ p ⊕ d = d.

On peut remarquer que, par rapport à une fonction de hachage classique, le protocole selon l'invention nécessite un plus grand nombre de transmissions (puisqu'il est nécessaire non seulement de transmettre la donnée chiffrée m, mais également la donnée en clair d et le germe w). En effet, avec une fonction de hachage classique, la mise en gage aurait été opérée sur une valeur de 64 ou 128 bits tandis que, dans le cas présent, si par exemple la longueur de la donnée d est de 10 000 bits, il faut transmettre au moins 10 000 bits ; l'invention est donc particulièrement adaptée dans les cas (en pratique les plus fréquents) où la donnée est de taille modeste, typiquement de longueur inférieure à 1 000 bits.

En termes de ressources mémoire nécessaires, le procédé de l'invention est en revanche particulièrement avantageux par rapport à une fonction de hachage classique : en effet, dans ce dernier cas, il aurait été nécessaire de cumuler un nombre de bits correspondant à la taille de bloc à hacher requise (typiquement 64 ou 128 bits) et, dans le cas où la donnée aurait été plus longue, - ce qui est souvent très souhaitable du point de vue de la sécurité - il est nécessaire de conserver en mémoire vive au moins le nouveau bloc et le résultat de l'opération de hachage précédente, soit 128 à 256 bits. à l'opposé, avec le procédé de la présente invention il suffit de transmettre les bits par blocs, qui peuvent être aussi petits que souhaité, avec des besoins en ressources mémoire réduits corrélativement. Il est même possible, dans le cas extrême, de transmettre les données bit à bit, donc sans nécessiter de stockage intermédiaire.

En ce qui concerne la sécurité du protocole, on va montrer que celle-ci est excellente, et ne dépend en fait que de la qualité du générateur pseudo-aléatoire choisi et de la longueur de la donnée mise en gage.

Soit x la longueur en bits du germe du générateur pseudo-aléatoire et y celle de la donnée.

Du point de vue de B, la seule solution pour "casser" le protocole est d'obtenir des indications sur le germe ou sur le mot sorti du générateur pseudo-aléatoire. Or le germe est produit de façon aléatoire et il est conservé secret jusqu'à l'ouverture. Le seul moyen pour B est donc d'essayer systématiquement tous les germes possibles ; s'il peut le faire, il pourra trouver une solution viable en vérifiant la validité des données ainsi produites.

Il faut donc que la longueur du germe soit assez grande pour éviter une attaque exhaustive, on peut donc fixer une limite inférieure de 264 germes possibles.

Du point de vue de A, l'intérêt d'une fraude est lié à la possibilité de trouver des collisions intéressantes. Cela veut dire qu'ayant une fausse donnée δ que A veut faire passer pour la donnée d mise en gage, il lui faut trouver un ω tel que :

$$d \oplus P(w) = \delta \oplus P(\omega),$$

ce qui revient à trouver $P(\omega) = d \oplus P(w) \oplus \delta$, et donc à trouver un germe correspondant à une sortie du générateur pseudo-aléatoire donnée. Or ce problème est rendu difficile du fait des propriétés intrinsèques des générateurs pseudo-aléatoires.

Cependant, il faut noter que si le mot en sortie est de longueur inférieure à celle du mot en entrée, le nombre de collisions pour une sortie donnée est supérieur à 1, donc une telle collision a toutes les chances d'exister.

Une autre remarque très importante est que A a tout le temps, avant la transaction, pour préparer sa fraude et trouver une collision intéressante, alors que B n'a généralement qu'un temps très limité (celui de la transaction).

Il faut donc minimiser les chances de succès de A. Ainsi, on peut remarquer que si l'on conserve par exemple un minimum de $2^{64}$ germes possibles, A peut se contenter de probablement $2^{32}$ essais avant de trouver une collision, ce qui est aisément faisable, et donc insuffisamment sûr (grâce au paradoxe des anniversaires).

Mais si le mot en sortie est de longueur y supérieure à la longueur x du germe, la probabilité qu'un mot donné puisse être produit par le générateur est seulement de $1/2^{y-x}$ soit par exemple $1/2^{32}$ si y = 96 et x = 64. Ce qui veut dire que A devra essayer $2^{32}$ valeurs différentes de δ pour en trouver une qui soit générée par le générateur pseudo-aléatoire, ce qui fait au total approximativement $2^{32} + {}^{32} = 2^{64}$ essais de couples (δ, ω), ce qui est en pratique irréalisable.

On peut donc imposer comme ordre de grandeur pour x et y les dimensions minimales suivantes :

- longueur x du germe > 60 bits ;
- longueur y de la donnée gagée > 100 bits (quitte à introduire de la redondance).

Exemple

Considérons un générateur pseudo-aléatoire basé sur un automate cellulaire et composé d'un registre circulaire de n sites $s_i$, avec $o < i \le n$. Ce registre évolue en appliquant sur chaque site si la fonction de changement d'état : $s_i = s_{i+1} \oplus (s_i \vee s_{i-1})$. A chaque tour, on fait évoluer le générateur et on "sort" la valeur du site $s_1$. L'initialisation du générateur consiste à donner une valeur à chaque site. Donc, le germe est de longueur n. On notera que si l'on désire k bits en sortie, il faut 2.n.k opérations élémentaires.

Ce générateur est sûr car il repose sur un "problème NP" (voir l'article précité de S. Wolfram), et le nombre de suites différentes générées est de l'ordre de $2^n$.

En ce qui concerne les dimensionnements, la donnée est de longueur 256 bits, le registre se compose de 61 sites. Cela donne de l'ordre de $2^{61}$ sorties possibles (appelées paddings), et la probabilité qu'une suite donnée de 256 bits corresponde à un germe est de $2^{-195}$, soit 1 chance sur $10^{58}$.

Le calcul de la mise en gage demande 32 000 opérations élémentaires, la vérification en demande autant.

**Revendications**

1. Un procédé de mise en gage de données pour un protocole d'échange de données sécurisé, du type comprenant :

   - une étape de "mise en gage", dans laquelle un partie débitrice (A), détentrice d'une donnée gagée (d), échange des informations avec une partie créancière (B) de manière à transmettre à cette dernière uniquement une donnée (m) image de la donnée gagée, représentant cette dernière de façon univoque mais non réversible,
   - une étape d'"ouverture", dans laquelle la partie débitrice échange des informations avec la partie créancière de manière à transmettre à cette dernière la donnée gagée en clair ou d'une manière permettant de la retrouver, et dans laquelle la partie créancière peut vérifier la conformité de cette donnée gagée avec celle de l'étape de mise en gage, procédé **caractérisé en ce que** :
   - à l'étape de mise en gage, la partie débitrice
   - produit un germe (w) appliqué à un générateur pseudo-aléatoire (GPA) de manière à produire un mot pseudo-aléatoire (p),
   - combine de manière univoque et réversible ce mot pseudo-aléatoire à la donnée mise en gage, de manière à produire un mot de contrôle (m), et
   - transmet à la partie créancière uniquement le mot de contrôle,
   - à l'étape d'ouverture la partie débitrice transmet à la partie créancière le germe avec la donnée gagée en clair, et
   - la partie créancière, à réception du germe et de la donnée gagée :
   - applique le germe à un générateur pseudo-aléatoire (GPA) semblable à celui de la partie débitrice, de manière à produire un autre mot pseudo-aléatoire (p'),
   - combine, de la même manière univoque et réversible que pour la partie débitrice, cet autre mot pseudo-aléatoire au mot de contrôle, de manière à produire une donnée de contrôle (d'), et
   - contrôle la conformité de la donnée de contrôle avec la donnée gagée en clair reçue de la partie débitrice.

2. Le procédé de mise en gage de données de la revendication 1, dans lequel :

   - le mot et l'autre mot pseudo-aléatoires produits par les générateurs pseudo-aléatoires respectifs des parties débitrices et créancières sont des mots de même longueur (y) que la donnée gagée, et
   - lesdites opérations de combinaison univoque et réversible sont des OU EXCLUSIF.

**Claims**

1. A process for pledging data for a secure data-exchange protocol, of the type comprising:

   a pledging step, in which a debtor party (A), the holder of a pledged data item (d), exchanges information with a creditor party (B) to transmit to the creditor party only a data item (m) which is the image of the pledged data item, representing the pledged data item in a one-to-one but non-reversible manner,
   a commencement step where the debtor party exchanges information with the creditor party to transmit to the creditor party the plain pledged data item or in a manner enabling the plain pledged data item to be retrieved, and in which the creditor party can verify the consistency of the pledged data item with that of the pledging step, process **characterized in that**:

   - in the pledging step, the debtor party:
   - produces a seed (w) applied to a pseudo-random generator (GPA) in such a way as to produce a pseudo-random word (p),
   - combines this pseudo-random word in a one-to-one and reversible manner with the pledged data item, to produce a checkword (m), and
   - transmits only the checkword to the creditor party,

- in the commencement step, the debtor party transmits to the creditor party a seed together with the plain pledged data item, and
- the creditor party, upon receiving the seed and the pledged data item:
- applies the seed to a pseudo-random generator (GPA) similar to that of the debtor party, to produce another pseudo-random word (p'),
- combines, in the same one-to-one and reversible manner as for the debtor party, another pseudo-random word with the checkword, to produce a check data item (d'), and
- checks the consistency of the check data item with the plain pledged data item received from the debtor party.

2. The process for pledging data of claim 1, wherein the word and the other pseudo-random word which are produced by the respective pseudo-random generators of the debtor and creditor parties, are words of the same length (y) as the pledged data item, and the one-to-one and reversible combining operations are provided by exclusive OR circuits.

**Patentansprüche**

1. Verfahren zum Verpfänden von Daten für ein abgesichertes Datenaustauschprotokoll des Typs, der Folgendes umfasst:

- einen Schritt des "Verpfändens", bei dem eine Debitorpartei (A), die eine verpfändete Information (d) besitzt, Informationen mit einer Kreditorpartei (B) so austauscht, dass dieser Letzteren nur eine Bildinformation (m) der verpfändeten Information übertragen wird, die diese Letztere eindeutig aber nicht umkehrbar darstellt,
- einen Schritt des "Öffnens", bei dem die Debitorpartei Informationen mit der Kreditorpartei so austauscht, dass sie dieser Letzteren die verpfändete Information in Klarschrift oder in einer Art übermittelt, die es ihr erlaubt, sie wieder zu finden, und in der die Kreditorpartei die Übereinstimmung dieser verpfändeten Information mit der des Verpfändungsschritts prüfen kann, Verfahren **dadurch gekennzeichnet, dass**:

- beim Verpfändungsschritt die Debitorpartei
- einen Keim (w) erzeugt, der an einen Pseudozufalls-Generator (GPA) so angelegt wird, dass ein Pseudozufallswort (p) erzeugt wird,
- eindeutig und umkehrbar dieses Pseudozufallswort mit der verpfändeten Information so kombiniert, dass ein Kontrollwort (m) erzeugt wird, und
- der Kreditorpartei nur das Kontrollwort übermittelt,
- die Debitorpartei beim Öffnungsschritt der Kreditorpartei den Keim mit der verpfändeten Information in Klarschrift übermittelt, und
- die Kreditorpartei beim Empfang des Keims und der verpfändeten Information:
- den Keim an einen Pseudozufalls-Generator (GPA), der ähnlich ist wie der der Debitorpartei, anlegt, um ein anderes Pseudozufallswort (p') zu erzeugen,
- eindeutig und umkehrbar wie die Debitorpartei dieses andere Pseudozufallswort mit dem Kontrollwort kombiniert, um eine Kontrollinformation (d') zu erzeugen, und
- die Übereinstimmung der Kontrollinformation mit der verpfändeten Information in Klarschrift, die sie von der Debitorpartei erhalten hat, prüft.

2. Verpfändungsverfahren von Daten nach Anspruch 1, bei dem:

- das Pseudozufallswort und das andere Pseudozufallswort, die von den jeweiligen Pseudozufalls-Generatoren der Debitorpartei und der Kreditorpartei erzeugt werden, Wörter mit gleicher Länge (y) wie die verpfändete Information sind, und
- die eindeutigen und umkehrbaren Kombinationsoperationen ODER-EXKLUSIV-Operationen sind.

EP 0 763 913 B1

A          B

G

w

x

GPA                              GPA

p = P (w)                        p' = P(w)

d

y

$m = p \oplus d$        m        m

$d' = m \oplus p'$

C   d=d'?

d          d